# EUROPEAN PATENT APPLICATION

(11) **EP 3 893 233 A1**
(43) Date of publication of application: **13.10.2021**
(21) Application number: 21176979.9
(22) Date of filing: 24.06.2020
(51) Int. Cl.: G09F 19/22, H04W 4/30

(54) **INTERACTIVE SYSTEM FOR A TRACK FOR HUMAN-DRIVEN VEHICLES AND METHOD FOR DATA TRANSFER IN AN INTERACTIVE SYSTEM**

(30) Priority: 24.06.2019 AT 505582019
(62) Divisional of application: 20736590.9
(71) Applicant: BRP-Rotax GmbH & Co. KG, 4623 Gunskirchen (AT); Ars Electronica Linz GmbH & Co KG, 4040 Linz (AT)
(72) Inventor: GRUBER, Stefan, 4661 Roitam (AT); LINDINGER, Christopher, 4040 Linz (AT)
(74) Representative: Hanna Moore + Curley

(57) **Abstract**

At least one virtual element is depicted in at least a first area on a road surface of a track for human-driven vehicles or as a hologram hovering above the road surface in the first area of the track. An interactive system comprises a first position detection system fixedly disposed at the track, the first position detection system being adapted for performing position detection of the vehicles in a second area of the track. At least one second position detection system fixedly is disposed proximally to the first area, which smaller than the second area. The at least one second position detection system allows more precise position detection than the first position detection system.

## Description

### CROSS-REFERENCE

The present application claims priority to Austrian patent application no. A50558/2019, filed on June 24, 2019, the entirety of which is incorporated herein by reference.

### FIELD OF TECHNOLOGY

The present technology relates to an interactive system for a track for human-driven vehicles and to a method for data transfer in an interactive system for a track for human-driven vehicles.

### BACKGROUND

Racing on a track, for example when driving go karts, can be fun. The driver experience may be improved via the creation of simulated environments on a track, for example a racetrack.

For example, US20180169530A1 describes a system for creating an environment. The system includes a server, at least one mobile element, a projection system that includes a plurality of projectors capable of projecting partial images which form an overall image, and a locating system that includes a plurality of sensors capable of detecting whether the mobile element is within its capture cone. The server determines, as a function of the information that it receives from the mobile element and from the locating system, information to be sent to the mobile element and to the projection system, so as to modify the environment perceived by a pilot of the mobile element and of potential spectators.

In another example, WO2019084583A1 describes a system for optical representation of information for person in a vehicle such as kart. The system includes a reproduction unit and a control unit arranged to reproduce individualized information by utilizing reproduction units on a track forming a closed circuit

Some disadvantages of these technologies include their complexity and cost, as they may require positioning a large number of cameras and position determining equipment along racetracks and require high bandwidth communication between the racetracks and vehicles. Other disadvantages include the fact that they may only be reasonably applicable in dark environments. Further disadvantages may include the lack of immersive experience provided by systems that provide limited projection visibility.

In view of the foregoing, there is a need for solutions that ameliorate over the disadvantages of conventional simulated environments.

### SUMMARY

It is an object of the present technology to ameliorate at least some of the inconveniences present in the prior art.

The present disclosure introduces an interactive system at the road surface of a track for human-driven vehicles, for example a racetrack, the interactive system providing with interactive elements while mitigating or avoiding the disadvantages of earlier solutions.

To address inconveniences of earlier position detection systems, in particular with regard to accuracy and incurred amounts of data transfer, the present technology disposes a first position detection system and at least one second position detection system at a track. The first position detection system performs position detection of the vehicles in a larger area of the track than the second position detection system. The second position detection system may be disposed in an area of at least one virtual element and allows more precise position detection than the first position detection system. In this system, both position detection systems may be arranged at the track and may thus comprise fixed components that communicate with a central controller directly. In an embodiment, there is no mutual communication taking place between the central controller and the vehicles for position determination.

According to one aspect of the present technology, there is provided an interactive system for a track for human-driven vehicles, wherein at least one virtual element is depicted in at least a first area on a road surface of the track or as a hologram hovering above the road surface in the first area of the track, the interactive system comprising:
a first position detection system fixedly disposed at the track, the first position detection system being adapted for performing position detection of the vehicles in a second area of the track; and
at least one second position detection system fixedly disposed proximally to the first area, the first area being smaller than the second area, the at least one second position detection system being adapted for allowing more precise position detection than the first position detection system.

In some embodiments of the present technology, at least one of the position detection systems is adapted for allowing identification of the vehicles based on a unique physical or digital feature of each of the vehicles.

In some embodiments of the present technology, the track is a closed circuit; and the first position detection system is disposed along the closed circuit.

In some embodiments of the present technology, the track is a racetrack.

In some embodiments of the present technology, the interactive system further comprises: a plurality of transmitters, each transmitter being adapted for transmitting a respective signal with a respective unique identifier, a respective transmitter being mounted on each respective vehicle; and a plurality of stationary receivers of the first position detection system, each stationary receiver being adapted for receiving signals from the plurality of transmitters, the stationary receivers being distributed over the second area of the track; wherein a position of a given vehicle is derivable from transit time differences of the signal from the transmitter of the given vehicle to the plurality of stationary receivers.

In some embodiments of the present technology, each of the first position system and the at least one second position detection system is selected from a group of measuring systems comprising distance sensors, rangefinders, photoelectric barrier measuring systems, light curtain measuring systems, laser time-of-flight measuring systems and LIDAR systems.

In some embodiments of the present technology, the interactive system further comprises: a central controller adapted to transmit data to the vehicles via a data transfer system of the track, the data transfer system being independent of the position detection systems.

In some embodiments of the present technology, the data transfer system further comprises a single fixed WLAN transceiver unit adapted for communicating with the vehicles at the track.

In some embodiments of the present technology, the interactive system further comprises: a tunnel comprising at least two tunnel segments, the first area on the road surface of the track being located beneath the tunnel; a plurality of projectors adapted for projecting images onto the first area on the road surface of the track, the projected images forming the at least one virtual element, a respective projector being mounted in each of the at least two tunnel segments, projection surfaces of successive ones of the plurality of projectors being seamlessly contiguous or at least partially overlapping; and a central controller; wherein: the first position detection system comprises at least three receivers adapted for receiving a signal of a transmitter disposed at a given vehicle and for deriving therefrom the position of the given vehicle in the tunnel, the at least three receivers being disposed in the tunnel; at least one of the at least one second position detection systems is disposed in at least one tunnel segment; and position data of the first and second position detection systems are transmitted to the central controller, the central controller being adapted for altering the position and/or an appearance of at least one given virtual element depicted in the projection surfaces based on the position data of the given vehicle.

In some embodiments of the present technology, the tunnel further comprises a first awning positioned at a start of the tunnel and a second awning positioned at an end of the tunnel; at least one of the projectors is further adapted for projecting the images onto a portion of the road surface of the track beneath the first awning; at least another one of the projectors is further adapted for projecting the images onto a portion of the road surface of the track beneath the second awning; and the at least three receivers of the first position detection system are further adapted for deriving the position of the given vehicle when the given vehicle is located beneath one of the first and second awnings.

In some embodiments of the present technology, at least one virtual element is depicted in at least one area on a road surface of the track or as a hologram hovering above the at least one area on the road surface of the track; the track is disposed inside an illuminated hall or runs at least partially outdoors; and the at least one area on the road surface of the track is within a partial area of the track, the partial area of the track being constructed as a tunnel, surrounding light in the partial area being less intense than in the illuminated hall or outdoors.

In some embodiments of the present technology, the tunnel further comprises a first awning positioned at a start of the tunnel and a second awning positioned at an end of the tunnel.

In some embodiments of the present technology, the interactive system further comprises: a plurality of projectors mounted above respective openings formed in a ceiling of the tunnel.

In some embodiments of the present technology, the tunnel is composed of multiple tunnel segments; the tunnel segments each comprise a roof having side faces perpendicular to the road surface of the track; openings are formed in the side faces; the side faces of contiguous tunnel segments facing each other are connected by a transition piece; the transition piece forms part of a ceiling of the tunnel; the roofs of the tunnel segments protrude above a level of the ceiling of the tunnel; and the interactive system further comprises a plurality of projectors mounted in the roofs of the tunnel segments.

In some embodiments of the present technology, the interactive system further comprises: a plurality of projectors, a projection surface of each projector covering a respective partial area of the road surface of the track; and the projection surfaces are contiguous or overlapping in a direction of travel of the vehicles on the road surface of the track.

In some embodiments of the present technology, the interactive system further comprises: a plurality of uniform tunnel segments of the tunnel, each uniform tunnel segment comprising a plurality of uniform roofs, each uniform tunnel segment having a rectangular layout; a plurality of projectors, at least one projector being mounted on each uniform tunnel segment; at least one transition piece, one transition piece being provided between the uniform roofs of adjoining tunnel segments, the at least one transition piece being adapted for compensating for different slopes or angles between the adjoining tunnel segments.

In some embodiments of the present technology, the track is a racetrack.

According to another aspect of the present technology, there is provided a interactive system for a track for human-driven vehicles, wherein:
at least one virtual element is depicted in at least one area of the track on a road surface of the track or as a hologram hovering above the road surface of the track; and
the at least one virtual element is depicted at an upward slope of the road surface of the track.

In some embodiments of the present technology, the at least one virtual element is depicted on a ramp of the road surface of the track, the ramp leading from a first level of the road surface of the track up to a second level of the road surface of the track.

In some embodiments of the present technology, the at least one virtual element is projected onto the road surface of the track from above by a projector.

In some embodiments of the present technology, the track is a racetrack.

According to a further aspect of the present technology, there is provided a method for data transfer in an interactive system for a track for human-driven vehicles located on the track, from a central controller to the vehicles, the method comprising:
depicting at least one virtual element in at least one area of the track on a road surface of the track or as a hologram hovering above the road surface of the track;
obtaining, at the central controller from one or more position detection systems, data on a respective position and identity of each vehicle located on the track;
providing, to the central controller, positions of virtual elements depicted at the road surface of the track;
generating, by the central controller, a piece of information based on the relative position of a given vehicle in relation to one or more given virtual elements;
transferring the piece of information from the central controller to the given vehicle, the piece of information further including at least one instruction for carrying out a function of the given vehicle or for altering the function of the given vehicle; and
processing the piece of information at the given vehicle without repeated communication with the central controller, the at least one instruction being executed for a limited period of time.

In some embodiments of the present technology, the method further comprises: storing the piece of information in a memory of the given vehicle following the transfer from the central controller; and retrieving the piece of information from the memory of the given vehicle at a later time.

In some embodiments of the present technology, the piece of information is retrieved from the memory of the given vehicle based on an operation performed by a driver of the given vehicle.

In some embodiments of the present technology, the data transfer between the vehicles and the central controller is performed via a single fixed WLAN transceiver unit at the track, the single fixed WLAN transceiver unit communicating with the vehicles located on the track.

In some embodiments of the present technology, the track is a racetrack.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1A is a sectional front view of a tunnel element in accordance with an embodiment of the present technology;
Figure 1B is a sectional side view of the tunnel of Figure 1A;
Figure 2 is a top view of a tunnel including multiple tunnel elements of Figure 1A in accordance with an embodiment of the present technology;
Figure 3 is a top view of a racetrack which is covered in part by a tunnel of Figure 2;
Figure 4 is a side view of the tunnel of Figure 2 in accordance with an embodiment of the present technology;
Figure 5 is a schematic top view of the structure of a modular tunnel in accordance with an embodiment of the present technology;
Figure 6 is a schematic top view of the structure of a variant of the modular tunnel of Figure 5 in accordance with an embodiment of the present technology;
Figure 7 is a schematic front view of the modular tunnel of Figure 5 or 6;
Figure 8 is an illustration of virtual elements being displayed within the tunnel;
Figure 9 is a sequence diagram showing operations of a method for data transfer in an interactive system for a track for human-driven vehicles in accordance with an embodiment of the present technology; and
Figure 10 is a block diagram of a central controller of the interactive system of Figure 9 in accordance with an embodiment of the present technology.

It should be noted that the various drawings are not to scale.

### DETAILED DESCRIPTION

The present technology will be described with respect to a racetrack. However, it is contemplated that the present technology could be applied to other track types. Application of the present technology is therefore not intended to be limited to its use in racetracks or in high speed driving applications. Additionally, while an intended use of the present technology is to human-driven vehicles on solid surfaces, the present technology may also be used for other applications that benefit from the present interactive system.

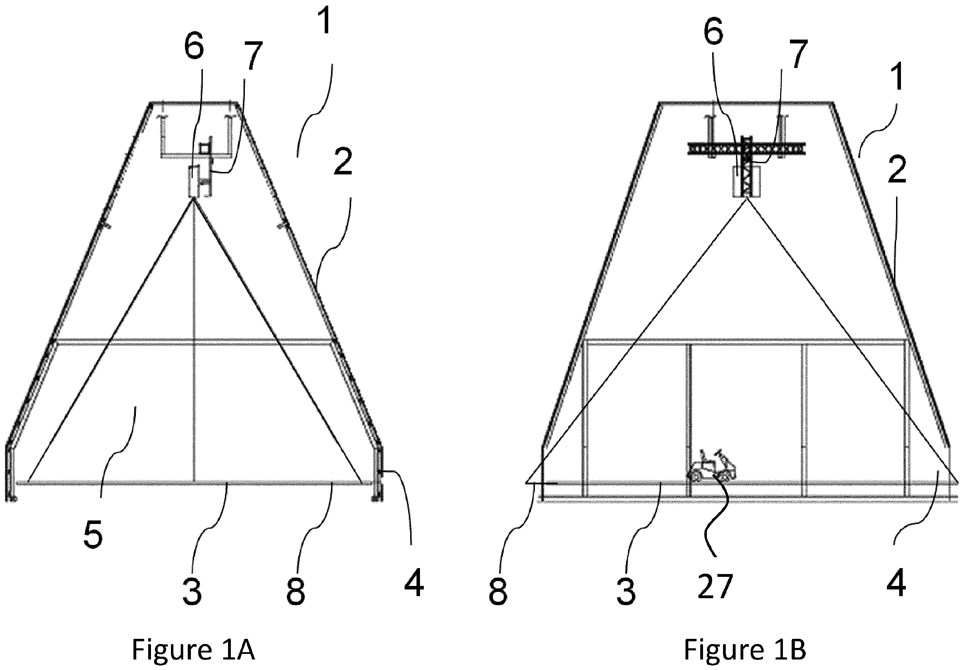

Figures 1A and 1B schematically show the structure of a tunnel segment 1 for use in the present interactive system. On Figure 1A, the tunnel segment 1 is depicted in a sectional view perpendicular to a direction of travel of vehicles 27 on the racetrack 3. Figure 1B shows the tunnel segment in a sectional view along the direction of travel.

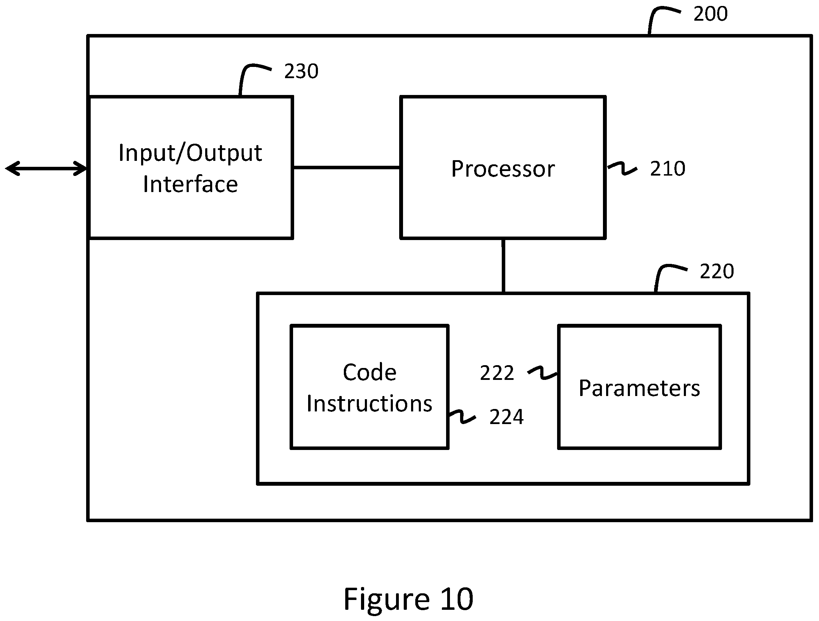

The tunnel segment 1 comprises a roof 2 in the shape of a truncated hollow pyramid, terminating at its lower end on a pair of vertical side walls 4 disposed on both sides of the racetrack 3 or road surface. The roof 2 has openings 5 in its side faces perpendicular to the direction of travel on the racetrack 3. At least one projector 6 is installed in the upper area of the roof 2. The at least one projector 6 is centrally installed in the roof 2 at an installing device 7, for example a crossbar. A projection surface 8 of the projector 6 may illuminate the entire length of the racetrack 3 beneath the roof 2. Alternatively, a plurality of projectors 6 may be provided, a projection surface of each projector 6 covering a respective partial area of the road surface of the racetrack 3 beneath the roof 2, the projection surfaces 8 of the projectors 6 being contiguous or overlapping in a direction of travel of the vehicles 27 on the road surface of the racetrack 3. The projection surface 8 of a given projector 6 may protrude from at least one of the openings 5 so as to project onto a part of the racetrack 3 in front of and/or behind the roof 2 where the given projector 6 is mounted. The projectors 6 may for example be ultra high-definition (UHD) projectors. The projectors 6 may be connected to a central controller (Figure 10), for example a computer, with data wires, for example with optical guides.

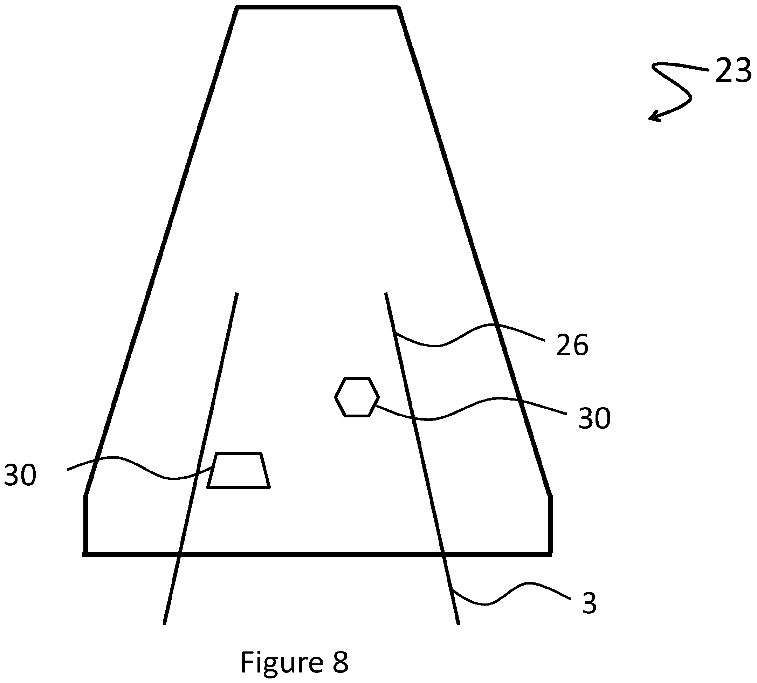

Virtual elements 30 (Figure 8) of the present interactive system may be limited to a partial area of the projection surface 8, wherein multiple virtual elements 30 may be depicted in one projection surface 8. At least one virtual element 30 is disposed in the overlapping area of two projection surfaces 8 of adjacent projectors 6, wherein each projector 6 depicts the virtual element 30 so to avoid shadowing of virtual elements 30 by vehicles 27 and drivers. In an embodiment, the racetrack 3 may be disposed inside an illuminated hall or run at least partially outdoors, the virtual elements 30 being depicted at a partial area of the racetrack 3, the partial area of the racetrack 3 being constructed as a tunnel, surrounding light in the partial area being less intense than in the illuminated hall or outdoors.

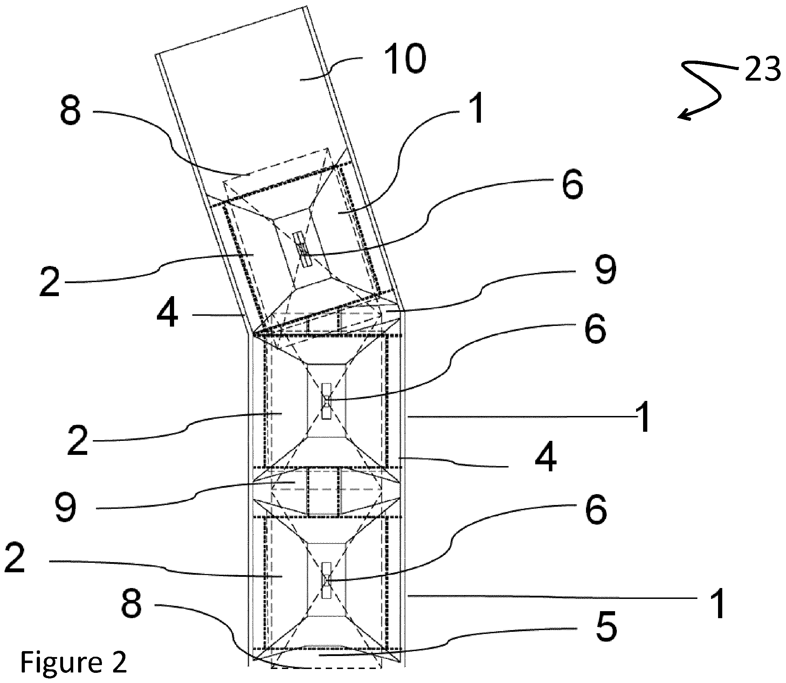

Figure 2 shows an example of a tunnel 23 composed of multiple tunnel segments 1. Transition pieces 9 may be disposed between the tunnel segments 1, for example one transition piece 9 being disposed between each pair of adjacent tunnel segments 1 so to form a continuous tunnel 23. As illustrated in Figure. 2, some of the tunnel segments 1 may have substantially identical layouts, each substantially identical tunnel segment 1 comprising a plurality of substantially identical roofs 2, for example with rectangular layouts. The tunnel segments 1 may be present with substantially identical dimensions.

As illustrated, the transition pieces 9 may be present in different manifestations. In areas of curves or knees of the racetrack 3, transition pieces 9 with substantially arcuate, triangular or cuneiform layouts may be employed. In the area of straight sections of the racetrack 3, transition pieces 9 with substantially rectangular layouts may be employed.

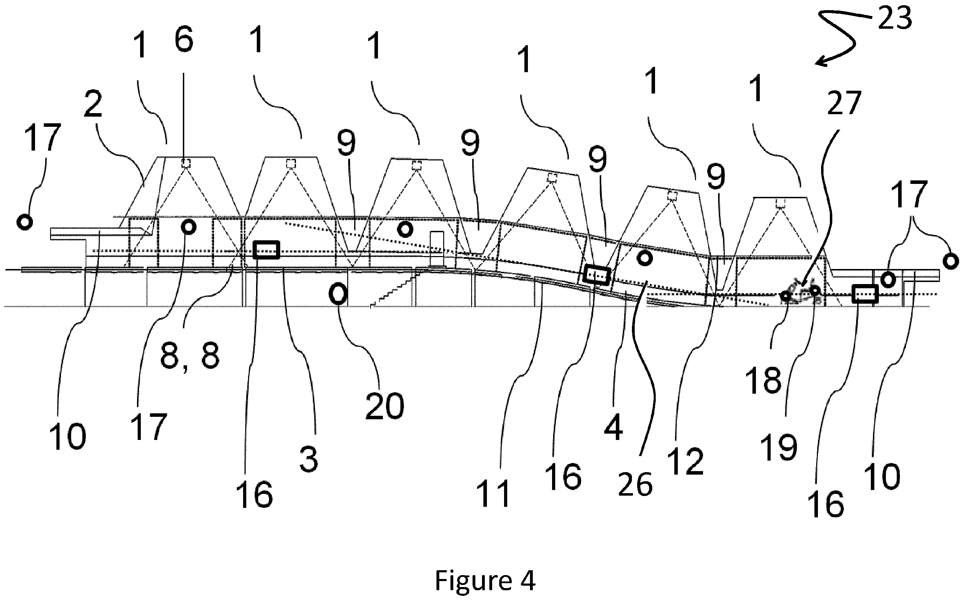

The transition pieces 9 connect the openings 5 of pairs of adjacent tunnel segments 1. Each of the transition pieces 9 thus each a transition ceiling 12 (Figure 4) between neighbouring roofs 2.

The transition pieces 9 may also have side walls similar to the side walls 4 of the tunnel segments 1. Alternatively, a part of the side walls 4 of the tunnel segments 1 may extend in the area of the transition pieces 9 so that, for each pair of adjacent tunnel segments 1, on each side of the road surface, a corresponding side of a transition piece 9 disposed between the pair of adjacent tunnel segments 1 connects one side wall 4 of the adjacent tunnel segment 1 to one side wall of another adjacent tunnel segment 1.

An awning 10 may be provided to cover a partial area of the racetrack 3. One awning 10 may be mounted to the opening 5 of the first tunnel segment 1, at an entrance of the tunnel 23, and another awning may be mounted to the opening 5 of the last tunnel segment 1, at an exit of the tunnel 23. These awnings 10, when present, may attenuate incident light in the first and/or last tunnel segments 1 of the tunnel 23.

As illustrated in Figure 2, the projection surfaces 8 of neighbouring projectors 6 may be seamlessly contiguous or even overlap. In the area of the curve or knee of the racetrack 3, the projection surfaces 8 of the two projectors 6 are shown to overlap.

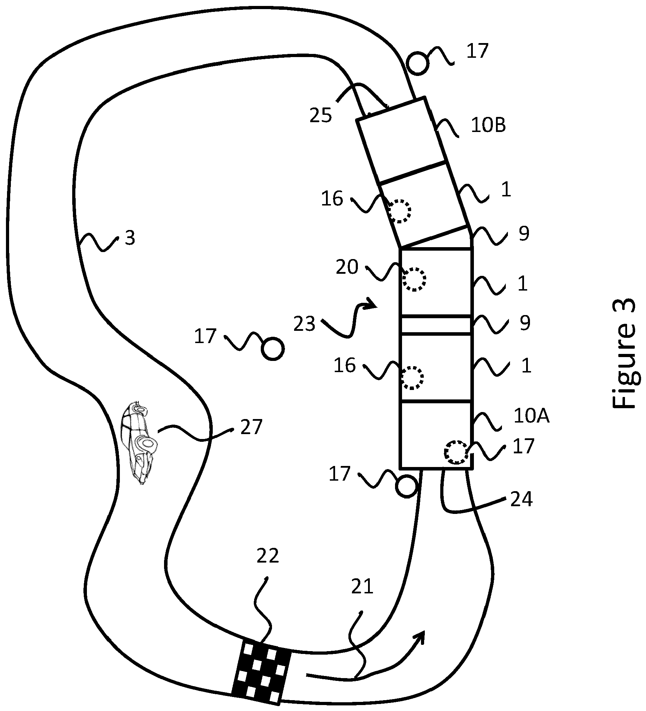

As shown on Figure 3, vehicles 27 may circulate on the racetrack 3 in a direction of travel 21 from a start/finish line 22, passing through the tunnel 23 at each turn on the racetrack 3. They reach an entrance 24 of the tunnel 23 via a first awning 10A and then reach an exit 25 of the tunnel 23 after a second awning 10B, having traveled beneath a number of tunnel segments 1 connected by transition pieces 9. Constructing the tunnel 23 with more or fewer tunnel segments 1, without or without the awnings 10A and/or 10B, is contemplated. In an embodiment, two or more tunnels 23 may be disposed on the racetrack 3.

Figure 4 illustrates an example of the tunnel 23 in a side view. On Figure 4, the direction of travel of vehicles 27 in the tunnel 23 is from the right hand side of the illustration toward the left hand side of the illustration. The tunnel 23 matches a ramp 11 of the road surface that, as illustrated, has an upward slope 26 leading from a first level of the road surface of the racetrack 3 (on the right hand side of Figure 4) up to a second, higher level of the road surface of the racetrack 3 (on the left hand side of Figure 4). Various upward slopes realised between the tunnel segments 1 may be compensated by the various shapes of the transition pieces 9.

A partial area of the racetrack 3, which is located in the tunnel 23, is formed as a display surface for the virtual elements 30 by the contiguous projection surfaces 8 of the projectors 6. One or more of these virtual elements 30 may be displayed on the upward slope 26 of the racetrack 3.

A ceiling 12 of the tunnel is formed by tops of the awnings 10 and tops of the transition pieces 9. As depicted, the tunnel ceiling 12 may be designed at different heights in the area of the awnings 10 and in the area of the transition pieces 9. The roofs 2 of the tunnel segments 1 may protrude above a level of the ceiling 12.

In a non-limiting embodiment, a vertical distance of the projectors 6 from the racetrack 3 is at least 4 to 6 meters. In the same or another non-limiting embodiment, a vertical distance of the tunnel ceiling 12 from the racetrack 3 is between 2 meters and 3.5 meters. The projectors 6 may therefore be mounted above the level of the tunnel ceiling 12.

By disposing the projectors 6 in roofs 2 which protrude above the level of the ceiling 12, each projector 6 may cover a larger area of the racetrack 3 than if they were mounted at the level of the ceiling 12.

Openings and/or ventilation grilles may be present in the roofs 2 above the projectors 6, for example in upper cover surfaces of the roofs 2.

The tunnel 23 may be entered from its lower end, before the upward slope 26, as in this case an angle of view onto the projection surfaces 8 presents itself in the area of the ramp 11 when entering.

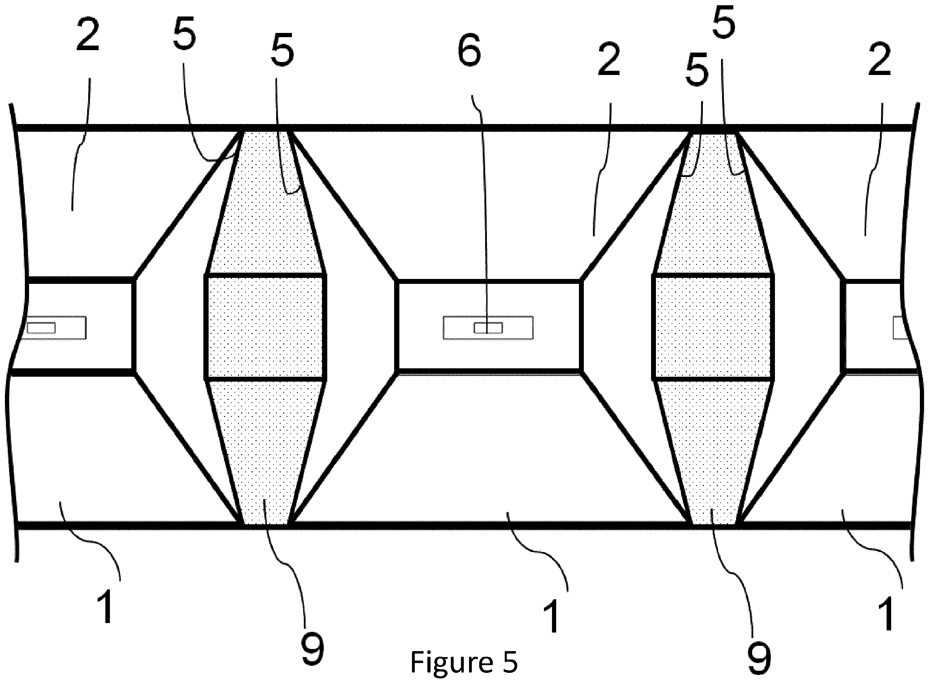

Figure 5 schematically shows an example embodiment of the roofs 2 and the transition pieces 9. The roofs 2 may be designed in the shape of truncated hollow pyramids, wherein their upper faces may be closed or open. The roofs 2 have openings 5 on opposite side faces. Inclined opening surfaces of the openings 5 result from the cut-outs in the trapezoidal side faces. The side faces of contiguous segments 1 facing each other may be connected by a transition piece 9.

The transition pieces 9 connect the peripheries of the openings 5. The transition pieces may be larger in size at their upper end than at their lower end in the direction of travel on the racetrack 3 to compensate for the diagonally rising opening flanks of the openings 5. The transition pieces 9 may comprise merely the upper surfaces depicted and the two diagonally rising side faces. Alternatively, the transition pieces 9 may also comprise part of the side wall 4.

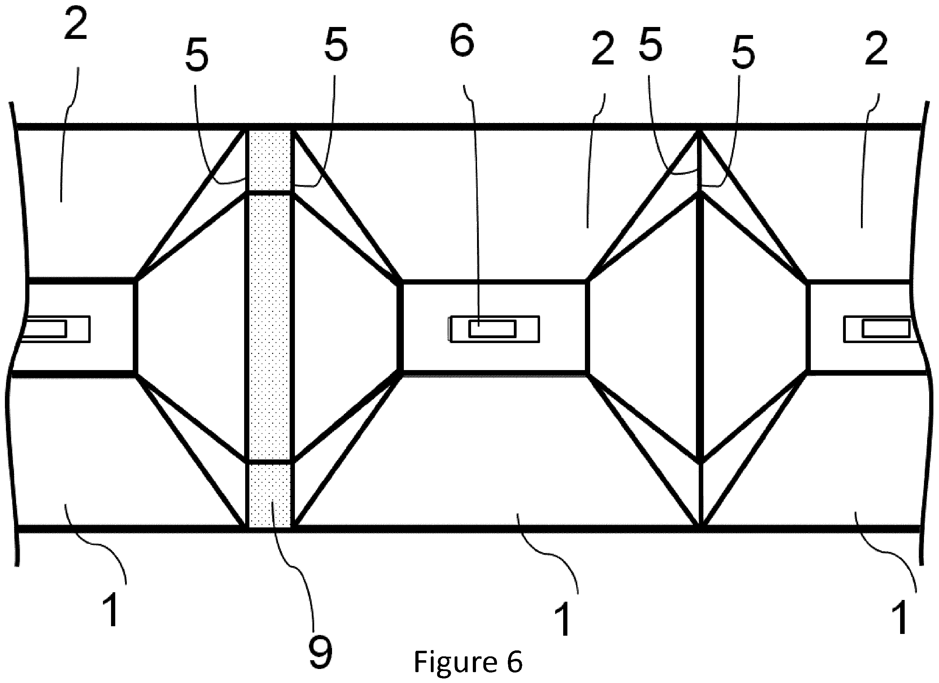

As depicted in Figure 6, in another variant embodiment, the roofs 2 may be designed with vertical opening surfaces of the openings 5. This may be achieved by the side face of the roof 2, at which the opening 5 is present, being composed of multiple partial faces. In this case, two roofs 2 may also be placed in a directly contiguous manner without a transition piece 9, if they are present at the same upward slope at a common straight section of the racetrack 3.

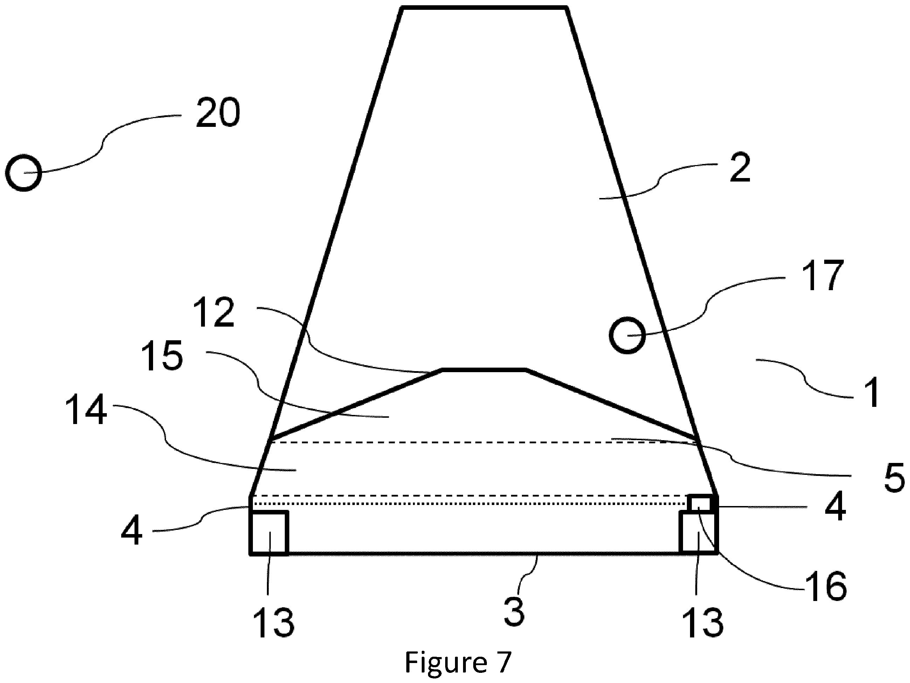

Figure 7 schematically illustrates a tunnel segment 1 in a front elevation view. The roof 2 has an opening 5 at its side face perpendicular to the direction of travel. The side faces longitudinally relative to the road surface rest on side walls 4. Bumper elements 13 capable of cushioning an impact may be provided along the side walls 4. The entrance opening of the tunnel segment 1 extends from the road surface up to the lower edge of the roof 2 via the side walls 4, and then over a partial area 14 of the side face perpendicular to the direction of travel, for example over the entire width of the side face perpendicular to the direction of travel. As depicted, a trapezoidal opening 15 in the side face perpendicular to the direction of travel may be present at the upper end of the partial area 14, occupying only a partial area of the side face perpendicular to the direction of travel. Instead of the trapezoidal opening 15, a triangular, polygonal, circular or ovoid opening may be provided.

Omitting the trapezoidal opening 15 in its entirety, so that the upper edge of the partial area 14, depicted in dashed lines, forms the ceiling 12 is also contemplated.

Optionally, the opening 5 in the roof 2 may be omitted altogether when designing the side walls 4 higher.

While the segmented structure of the tunnel 23 described along with the figures allows achieving a modular structure for different racetrack routes, it should be understood that other tunnels may be used for the present technology.

Figure 8 shows only one of a myriad of possible examples of virtual elements 30 that may be displayed within the tunnel 23. In the illustrated example, the driver of a vehicle 27 entering the tunnel 23 on the racetrack 3 may see on the upward slope 26 of the ramp 11 a trapezoidal virtual element 30 designed to emulate a podium, so that driving over this element may cause the central controller 200 to allocate a temporary performance boost to the vehicle 27. Driving over an octagonal virtual element 30 designed to emulate a stop sign may cause the central controller 200 to temporarily reduce the performance of the vehicle 27. There is no limit to the number of types of the virtual elements 30 displayed within the tunnel 23. In an embodiment, these virtual elements 30 may change with time, for example based on a position, on speed and/or identity of a vehicle 27 entering the tunnel 23, or depending on a theme selected by an operator of the racetrack 3. Referring back to Figure 4, the virtual element or elements may be displayed in the area of the upward slope 26 of the ramp 11.

In a non-limiting embodiment, openings formed by the tunnel segments 1 may be provided in the ceiling 12, and projectors 6 may be mounted in the tunnel segments 1 above the level of the ceiling 12, for example, to make an existing tunnel 23 suitable for the present interactive system. The virtual elements 30 may also be depicted at a non-roofed area of the racetrack 3.

Instead of projecting the virtual element 30 onto the road surface using conventional projectors, the virtual element 30 may be depicted as a hologram above the road surface using a hologram projector.

In the following, an embodiment of position detection systems 17 fixedly disposed at the racetrack 3, in the tunnel 23, is described with reference to Figures 3, 4 and 7. The position detection systems 17 are adapted to perform position detection of the vehicles 27. The position of the vehicles 27 is derived from transit time differences of signals from transmitters mounted on the vehicles 27 and received at stationary receivers of a plurality of position detection systems 17. In more details, a position detection system 17 may comprise a LIDAR (Light Detection and Ranging) apparatus 16 mounted in the tunnel 23 or in at least one tunnel segment 1. The LIDAR apparatus 16 may emit a laser beam, which is pivoted or rotated in a plane, being for example parallel to the road surface, and receives reflections of the laser beam, from the time of flight of which the presence of and distance from objects may be determined. Multiple LIDAR apparatuses may be mounted in the tunnel 23, for example 3 or 4 LIDAR apparatuses 16 in some embodiments. The tunnel 23 may extend over two levels, wherein one LIDAR apparatus 16 is disposed on each level, for example and without limitation in the area of the ramp 11. Apart from the LIDAR apparatus 16, the various position detection systems 17 may comprise one or more of distance sensors, rangefinders, photoelectric barrier measuring systems, light curtain measuring systems, and laser time-of-flight measuring systems.

In an embodiment, the position detection systems 17 may comprise at least one UWB (ultra wideband) receiver mounted in the tunnel 23 or in at least one tunnel segment 1. A transmitter 18, for example a UWB transmitter, may be mounted on each vehicle 27 and emit signals detectable by the position detection systems 17. Multiple UWB receivers may be mounted in the tunnel 23, so that the signal of one UWB transmitter at the vehicle 27 is receivable by three UWB receivers in each position in the tunnel 23. Alternatively or in addition, more UWB receivers may be mounted along the entire racetrack 3. For example, additional UWB receivers may be mounted along the racetrack 3, so that the signal of a UWB transmitter at the vehicle 27 is receivable by the additional UWB receivers in any position along the racetrack 3.

In an embodiment, at least one tunnel segment 1 may comprise a LIDAR system 16 and at least one UWB receiver. For example, at least one tunnel segment 1 may comprises one receiver of the first position detection system 17 and at least one second position detection system 17 located proximally to the area where the at least one virtual at least one virtual element 30 is depicted.

In addition, the racetrack may comprise a data transfer system. The data transfer system may comprise a fixed wireless communication apparatus 20 transmitting information to a wireless communication apparatus 19 disposed at the vehicle 27. The wireless communication apparatuses 19 and 20 may for example be WLAN (wireless local area network) communication apparatuses. The transmission range of the fixed wireless communication apparatus 20 may cover at least the entire tunnel 23 in one embodiment, or the entire racetrack 3 in another embodiment, so that vehicles 27 on the racetrack 3 receive data only from the fixed wireless communication apparatus 20.

The fixed wireless communication apparatus 20 may be placed at a central point within a circular racetrack 3.

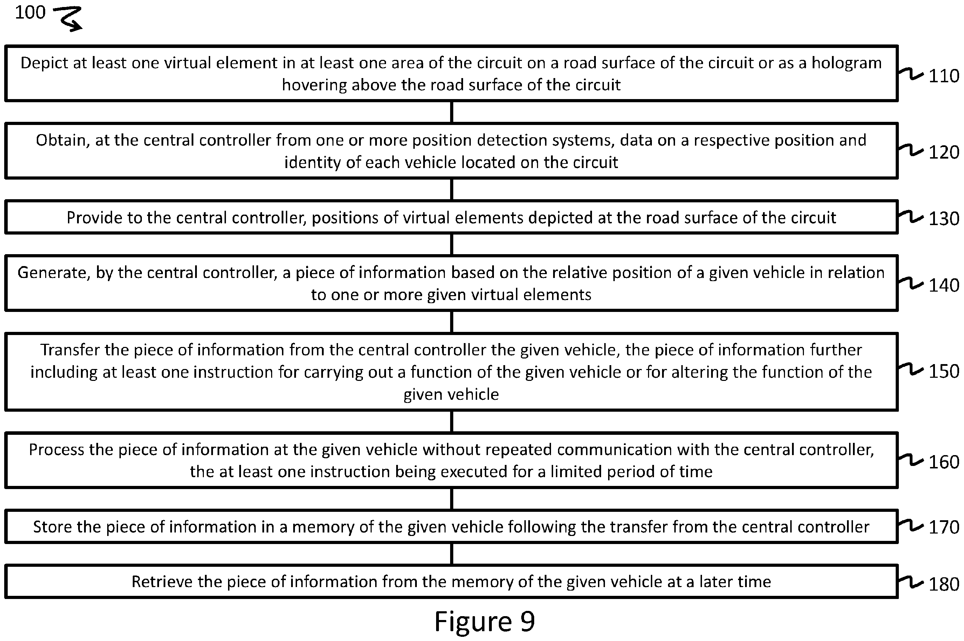

Figure 9 is a sequence diagram showing operations of a method for data transfer, from a central controller to human driver vehicles 27 located on a racetrack 3, for example on a racetrack. On Figure 9, a sequence 100 comprises a plurality of operations, some of which may be executed in variable order, some of the operations possibly being executed concurrently, some of the operations being optional.

At operation 110, at least one virtual element 30 is depicted in at least one area of the racetrack 3 on a road surface of the racetrack 3 or as a hologram hovering above the road surface of the racetrack 3. The central controller obtains, from one or more position detection systems 17, data on a respective position and identity of each vehicle 27 located on the racetrack 3 at operation 120. At operation 130, positions of virtual elements 30 depicted at the road surface of the racetrack 3 are provided to the central controller. The central controller generates, at operation 140, a piece of information based on the relative position of a given vehicle 27 in relation to one or more given virtual elements 30. The central controller may select a particular virtual element 30 based on the position, on a speed and/or on the identity of the given vehicle 27. The piece of information is transferred from the central controller the given vehicle 27 at operation 150. In addition to the relative position of the given vehicle 27 in relation to the one or more given virtual elements 30, the piece of information may further include at least one instruction for carrying out a function of the given vehicle 27 or for altering the function of the given vehicle 27. Data transfer between the vehicles 27 and the central controller may be performed via a single fixed WLAN transceiver unit at the racetrack 3, the single fixed WLAN transceiver unit communicating with the vehicles 27 located on the racetrack 3.

At operation 160, the given vehicle 27 may process the piece of information without repeated communication with the central controller, the at least one instruction being executed for a limited period of time. Following the transfer from the central controller, the piece of information may be stored in a memory of the given vehicle 27 at operation 170. The piece of information may be retrieved from the memory of the given vehicle 27 at a later time, at operation 180. For example and without limitation, the piece of information may be retrieved from the memory of the given vehicle 27 based on an operation performed by a driver of the given vehicle 27.

Each of the operations of the sequence 100 attributed to the central controller may be configured to be processed by one or more processors, the one or more processors being coupled to one or more memory devices. Figure 10 illustrates an embodiment of a central controller 200. The central controller 200 comprises a processor or a plurality of cooperating processors (represented as a processor 210 for simplicity), a memory device or a plurality of memory devices (represented as a memory device 220 for simplicity), an input/output device or a plurality of input/output devices (represented as an input/output device 230 for simplicity). Separate input devices and output devices (not shown) may be present instead of the input/output device 230. The processor 210 is operatively connected to the memory device 220 and to the input/output device 230. The memory device 220 may include a storage 222 for storing parameters, including for example information related to the at least one virtual element 30 and its location along the racetrack, information about the position detection systems 17, the position of each vehicle 27 located on the racetrack, and the like. The memory device 220 may also comprise a non-transitory computer-readable medium 224 for storing instructions that are executable by the processor 210, for example to allow the processor to execute or cause to execute operations 110, 120, 130, 140 and 150 of the sequence 100. The input/output device 230 may be connected by wire or wirelessly to the position detection systems 17, the projectors 6, the UWB receivers, and to the communication apparatuses 19 and 20.

Various embodiments of the present technology may be contemplated, as expressed in the following paragraphs.

In an embodiment, the central controller 200 transmits data to the vehicles 27 via a data transfer system independent of the position detection systems 17. Thus, in an embodiment, at least first and second position detection systems 17 and a data transfer system may be disposed at the racetrack 3. The data transfer system may comprise a WLAN system, for example operating over a Wireless Fidelity (WIFI) connection.

In an embodiment, at least one of the position detection systems 17 also allows identification of the vehicles 27. This may be done by each vehicle 27 having a unique distinctive feature, which may be detectable or receivable by at least one of the position detection systems 17. In an embodiment, the unique distinctive feature may be a digital value, which may be transmitted from the vehicle 27 to the position detection systems 17 once or repeatedly. In another embodiment, the unique distinction feature may be a unique physical feature of a vehicle 27. Since the digital value may be transmitted from the vehicle 27 to the position detection system 17, no direct communication is required between the vehicle 27 and the central controller 200 for position detection. In an embodiment, the vehicle 27 does not receive any data from the position detection system 17.

In an embodiment, position detection by the first position detection system 17 may be continuous and complete over the entire racetrack 3. In an embodiment, position detection by the first position detection system 17 may also be in the area of the second position detection system 17, so that the position may be detected by the first and second position detection systems 17 in the area of the at least one virtual element 30.

Optionally, position detection may be solely performed by the second position detection system 17, disposed in proximity to a partial area of the racetrack 3 where the at least one virtual element 30 is depicted. In another option, position detection of the vehicles 27 may be performed solely by the second position detection system 17 in the area proximate to at least one virtual element 30. In an embodiment, the positions of the vehicles 27 may be continuously sensed by overlapping detection areas of the first and second position detection systems 17.

In an embodiment, position detection and identification of the vehicles 27 on the entire racetrack 3 may be performed based on a first position detection system 17, a second position detection system 17 being provided to allow more precise position determination than the first position detection system 17 in the area of the virtual elements 30. This embodiment allows the first position detection system 17 to perform position detection and identification of the vehicles 27, providing first position data for each vehicle 27, while the second position detection system 17 determines the position of the vehicles 27, since it is known from the first position detection system 17 which vehicle(s) 27 may be currently arriving or located in the area of the second position detection system 17. The second position detection system 17 may therefore only perform the position determination of objects, but not their identification. By this measure, photoelectric barriers, laser time-of-flight measuring systems or LIDAR systems may be used in the second position detection system 17, which allow to precisely and quickly determine the position of objects, without the need to consider their identification, in particular if they are objects with uniform dimensions. For example, a distance measuring apparatus, for example in the form of a laser time-of-flight measuring system being directed to the racetrack 3, may be disposed in the area in front of at least one virtual element 30 on the side of the racetrack 3. Using a, signal from the distance measuring apparatus, once an object is sensed, the position of an object in the direction of travel of the racetrack 3 and its distance from the distance measuring apparatus is a direction perpendicular to the racetrack 3 may be established, providing second position data for each vehicle 27. The relative position of the object with respect to a virtual element 30 depicted at the racetrack 3 may be precisely derived from those two position data. If such distance measuring apparatuses are disposed on both sides of the racetrack 3, the positions of two vehicles 27, which may be present in the measuring area of the distance measuring apparatus at the same time, may also be derived. By using a LIDAR system, which may be located in an elevated position, the positions of all vehicles 27 present in the measuring area of the LIDAR system may be determined.

In an embodiment, multiple two-dimensional LIDAR systems, which sense the presence and position of objects in a two-dimensional plane, may be mounted in the area of the virtual elements 30.

As described above, it may not be necessary for the second position detection system 17 to perform identification of the vehicles 27, if this has already been done by the first position detection system 17. The second position detection system 17, however, may additionally perform the identification of the vehicles 27. In an embodiment, identification of the vehicles 27 by the second position detection system 17 may be based on unique distinctive features of the vehicles 27 different from those used when the first position detection system 17 is used. For example, the LIDAR system may identify the vehicles 27 based on a physical object mounted on the vehicle 27, the physical object having an individual geometry and/or a specific position on the vehicle 27.

Optionally, identification of the vehicles 27 may also be obtained via the second position detection system 17, via a further, third position detection system 17, or via an additional identification system. For example, identification of the vehicles 27 may be done when they are started or each time they cross the start/finish line 22, in particular the starting line, wherein the respective identification may be assigned to that vehicle 27. The position at which the vehicles 27 are started or their positions when passing the start/finish line 22 coincides with the position of a vehicle 27 derived by the first position detection system 17. If the first position detection system 17 continuously senses the position of the vehicles 27 identified at least once over the entire racetrack 3, repeated identification may not be necessary.

Identification may also be exclusively or additionally be done by the second position detection system 17, wherein the identification may be assigned to that vehicle 27 the positions of which derived by the first and second position detection systems 17 coincide or correlate the most.

In an embodiment, the first and second position detection systems 17 detect signals from transmitters 18 mounted on the vehicles 27, which transmit an electromagnetic signal, in the form of an omnidirectional radio signal, and a plurality of receivers distributed over space around the racetrack 3, which receive the radio signals, wherein the position detection and identification of the individual vehicles 27 may be done by each signal of the transmitters 18 being assigned a unique identifier and a piece of time information and the positions of the individual vehicles 27 may be derived via the time-of-flight differences of the signals received by the receivers of the first and second position detection systems 17. By triangulation, trilateration or any other known mathematical method of signal processing, the three-dimensional position of a vehicle 27 in space or the two-dimensional position of the vehicle 27 on the racetrack 3 may be calculated from the time-of-flight differences of the signal of its transmitter to different receivers. In an embodiment, the first position detection allows the position to be determined within a mean accuracy of less than 25 centimeters.

In an embodiment, the second position detection system 17 comprises at least one laser time-of-flight measuring system, which may be able to detect the precise spatial, or two-dimensional, position and orientation of a vehicle 27 on the racetrack 3 by time-of-flight determination of a laser beam reflected by the vehicle 27. In an embodiment, the second position detection system 17 allows position detection within a mean accuracy of less than 10 centimeters, for example less than 5 centimeters.

In an embodiment, the position detection systems 17 may operate entirely without the use of cameras, so that potential personal data protection issues may be avoided. In such a case, no position determination is performed at the vehicle 27 itself, so that the data exchange between the vehicle 27 and the central controller 200 may be kept at a minimum.

For enhancing the visibility of virtual elements 30 at the racetrack 3, in an embodiment, the virtual elements 30 may be depicted at the upward slope 26 formed, for example on the ramp 11 which leads from a first level of the racetrack 3 up to a second, higher, level of the racetrack 3.

The virtual elements 30 may be two-dimensional projections onto the road surface or three-dimensional projections in which a virtual, three-dimensional object, or hologram, appears above the road surface.

In an embodiment, the racetrack 3 may be constructed in a well-lit environment, with the virtual elements 30 being provided in a partial, less illuminated area of the racetrack 3, this area being constructed, for example, as a tunnel 23 comprising a plurality of tunnel segments 1 and optionally comprising the additional awnings 10.

In an embodiment, the virtual elements 30 may be depicted in the tunnel 23 forming a roofed area of the racetrack 3, on its road surface, wherein the racetrack 3 takes and the upward slope 26 in the roofed area, wherein the position sensing and identification of the vehicles 27 on the racetrack 3 may be performed by a first position detection system 17 and the position sensing of vehicles 27 in the roofed area where the virtual elements 30 are depicted may be performed by a second, more accurate position detection system 17.

In an embodiment, the virtual elements 30 may be influenced by the central controller 200 based on the position detection of the vehicles 27.

In an embodiment, the vehicles 27 may be influenced by the central controller 200 based on their position with respect to the virtual elements 30. For example, passing over a virtual element 30 may trigger a control protocol of the central controller 200 which influences the travelling behaviour of the vehicle 27.

In an embodiment, projectors 6 each projecting an image onto the road surface or a hologram inside of the tunnel 23 may be disposed in the tunnel 23 or in the roofed area of the racetrack 3. Optionally, the road surface may be used as a screen, for example, by having one or more display surfaces disposed behind one or more glass panels.

In an embodiment, a tunnel segment 1 may comprise at least one roof 2 that may be conical or frustoconical or in the shape of a pyramid, which may be truncated. A projector 6 may be mounted in an upper end area of the at least one roof 2 for projecting an image onto the surface of the racetrack 3.In another embodiment, the tunnel segments 1 that form the tunnel 23 may comprise at least two roofs 2 for mounting at least two projectors 6.

In an embodiment, the images of the projectors 6 may be contiguous or overlap in order to create the illusion of a single continuous projection. In an embodiment, the roofs 2 that may be frustoconical or in the shape of a truncated pyramid may be adjoined by closed walls, which connect the roofs 2 to the floor or the ramp 11. Optionally, the walls may also serve as projection surfaces 8. To this end, projectors 6 may be disposed in the inclined surfaces of the roofs 2 or on opposite walls, or screens may be disposed on the walls.

By this design, a partial area of the otherwise lit racetrack 3 may be partially dimmed with respect to the surrounding light around the racetrack 3 outside of the tunnel 23 to make the virtual element 30 well visible in this area. Sufficient light intensity to allow driving is still provided in the tunnel 23 due to the illumination of the road surface by the projectors 6 and optionally the walls of the awnings 10 or of the tunnel segments 1.

In an embodiment, the upward slope 26 in the tunnel 23 provides a better view of the virtual elements 30 projected along this slope. External light that may be visible at each end of the tunnel 23, which might impair the visibility of the virtual elements 30, is at least in part hidden from view of the drivers when they enter the tunnel 23 and at least until they reach the end of the upward slope 26.

The central controller 200 may control the virtual elements 30 and processes the position information of the position detection systems 17. The central controller 200 may transmit instructions to actuators of the vehicles 27 and/or information to a data memory of the vehicles 27.

In an embodiment, the wireless communication apparatuses 19 mounted on the vehicles 27 may communicate with the central controller 200 via the fixed wireless communication apparatus 20 using WLAN or another wireless technology. In an embodiment, only one transceiver unit of the fixed wireless communication apparatus 20 may be present over the entire racetrack 3 so that the vehicles 27, sometimes travelling at high speed, communicate with a single transceiver unit. A handover of communication from one transceiver unit to the next may thus be omitted.

In an embodiment, the transmission range of the transceiver unit may comprise the entire racetrack 3. In another variant embodiment, the transmission range of the transceiver unit may comprise the area of the virtual elements 30, in particular the part of the racetrack 3 which is present in the tunnel 23, beneath the tunnel segments 1 and/or the awnings 10, where the virtual elements 30 may be depicted.

Communication between the vehicles 27 and the central controller 200 may occur over the entire racetrack 3 or only in the area of the virtual elements 30. Communication may be unidirectional from the central controller 200 to the vehicles 27 or bidirectional. Unidirectional communication provides that the vehicles 27 do not need to have transmitters for communicating with the central controller 200.

In an embodiment, instructions to actuators of the vehicles 27 may be generated by the central controller 200 depending on the relative positions of the vehicles 27 with respect to virtual elements 30.

In an embodiment, instructions to actuators of the vehicles 27 may be generated by the central controller 200 depending on the relative positions of the vehicles 27 with respect to the delimitations of the racetrack 3.

In an embodiment, instructions to actuators of the vehicles 27 may be generated by the central controller 200 depending on previously calculated movement trajectories of the vehicles 27.

In an embodiment, instructions to actuators of the vehicles 27 may be generated by the central controller 200 depending on the relative positions of vehicles 27 with respect to one another.

In an embodiment, a piece of information which makes a function of a vehicle 27 retrievable by the driver of the vehicle 27 may be transmitted to a data memory of the vehicle 27 by the central controller 200 based on the relative position of the vehicle 27 with respect to a virtual element 30. A function or impact of the virtual element 30 on the performance of the vehicle 27 may thus result from an interaction of the vehicle 27 with the virtual element 30. No repeated communication between the central controller 200 and the vehicle 27 is needed for this effect to take place.

In an embodiment, multiple areas with virtual elements 30 may be disposed along the racetrack 3, wherein one of multiple second position detections is provided in each of the areas.

In an embodiment, each vehicle 27 may have a WLAN module, wherein actuators and optionally sensors of the vehicle 27 may be attached via a bus system, in particular a controller area network (CAN) bus.

In an embodiment, each vehicle 27 may comprise at least one electric motor with power electronics for a drive of the vehicle 27. In an embodiment, the power of the vehicle 27 may be influenced by the central controller 200 or by information received from the central controller 200 and stored in the data memory of the vehicle 27, in view of altering the parameters of power electronics of the electric motor. In an embodiment, the central controller 200 or information from the data memory may dictate altered parameters of the power electronics and a time period for which the altered parameters may be to be applied. Thereby, by one-time communication or data transfer with the central controller 200, an effect on the vehicle 27 may be maintained or made available for a certain time period without repeated communication and/or feedback by the vehicle 27 being necessary.

In an embodiment, the first position detection system 17 may use UWB position determination technology. An indoor position detection system 17 using UWB has an accuracy of about 10 to 30 centimetres and low latency, capable of allowing position sensing up to 100 times per second. In UWB technology, position determination is based on a time-of-flight (ToF) method. In the method, the signal propagation time between an object and multiple receivers may be measured. For example and without limitation, three or more receivers may be used to accurately localise an object using trilateration.

In an embodiment, each vehicle 27 may have a transmitter, in particular an UWB transmitter, while multiple UWB receivers may be disposed along the racetrack 3. In an embodiment, directional receivers which sense signals from a direction with limited angular range may be present as well as receivers which sense signals from a wide angular range, for example, omnidirectional receivers detecting all signals frontally impinging upon the sensor surface in a 360° range. In an embodiment, receivers may be disposed along the entire racetrack 3. In an embodiment, the receivers may have a distance with respect to one another of, for example 3 to 15 meters or 5 to 12 meters, in a direction of travel of the vehicles 27 on the racetrack 3. In an embodiment, the receivers may be disposed at a height of 1 to 5 meters or at a height of 1.4 to 3 meters above the road surface. In an embodiment, at least twenty receivers, or up to thirty or forty receivers, may be disposed along the racetrack 3.

In an embodiment, a further position detection system may determine a lap time of the vehicles 27, the further position detection system using, for example, an induction loop underneath the road surface of the racetrack 3.

In an embodiment, multiple loudspeakers may be installed in the tunnel 23. In an embodiment, at least six or eight loudspeakers may be installed in the tunnel 23. In an embodiment, each tunnel segment 1, each awning 10 and/or each transition element 9 may have at least two loudspeakers, which may be present on opposite sides of the tunnel walls. The loudspeakers may also be present independently of the tunnel segments 1. Thus, any number of loudspeakers may be mounted in any locations of the tunnel 23 or of the racetrack 3.

In an embodiment, the position determination of the vehicles 27 may be used to control or adjust the rendition of sounds and noises from the loudspeakers. In an embodiment, the signals may be altered by the data of the position detection systems 17 at multiple loudspeakers such that the sounds and/or noises follow the respective vehicles 27 along the racetrack 3 from one loudspeaker or pair of loudspeakers to the next.

In an embodiment, a signal to the loudspeakers may be generated for each vehicle 27, wherein the signal is provided to different mutually spaced-apart loudspeakers with different levels, wherein the level of the signal is altered depending on the distance between the respective loudspeaker and the respective vehicle 27.

In one variant embodiment, control of the loudspeakers may be based on the position, status and/or current appearance of at least one virtual element 30. In an embodiment, an alteration of the depiction of a virtual element 30 may be made based on the detected relative position of a vehicle 27 with respect to the virtual element 30, and rendition by at least one loudspeaker may be initiated at the same time or as a result of the alteration. However, control of the loudspeaker may also be independent of the position of the vehicles 27 and/or the position of the virtual elements 30.

In an embodiment, a virtual route with dimensions smaller than the width of the racetrack 3 may be depicted on the road surface, wherein the position of the vehicle 27 is derived relative to the virtual route, and data may be generated and transferred to the vehicle 27 based on the derived relative position.

In an embodiment, virtual elements 30 may be depicted on the road surface, wherein the position of the vehicle 27 is determined relative to the virtual elements 30, and data may be generated and transferred to the vehicle 27 based on the derived relative position. In an embodiment, alternatively or additionally, the depiction of at least one virtual element 30 may be altered based on the derived relative position, for a limited period of time, after which the virtual element 30 may be reset to its original condition. In an embodiment, alternatively or additionally, the rendition or level of rendition of loudspeakers may be altered based on the derived relative position.

In an embodiment, the position of virtual elements 30 may be altered based on the derived position of a vehicle, so that virtual elements 30 may be moved towards or away from a vehicle 27.

In an embodiment, the respective vehicle 27 may be assigned a unique identifier for the driver of the vehicle 27. In an embodiment, the driver-vehicle 27 combination may be assigned a configuration, which affects the vehicle 27 performance. For example, the performance of the vehicle 27 may be adapted to the weight, experience and/or previously achieved times per lap of the driver. The vehicle 27 performance may be altered depending on the lap time or number of laps travelled. In an embodiment, this may be used to allow inexperienced drivers a familiarisation period in the beginning. In an embodiment, vehicle 27 drivers may be weighed prior to the drive and their weight may be stored. In an embodiment, drivers may be each assigned a vehicle, or a driver may be assigned to each vehicle, prior to the drive. In an embodiment, the performance of the respective vehicle 27 may be adapted to the stored weight of the respective driver.

In an embodiment, the vehicle 27 performance may also be altered depending on the relative positions of the vehicles 27 with respect to one another.

In an embodiment, the performances of vehicles 27 to be overtaken may be reduced when an overtaking vehicle 27 approaches to facilitate the overtaking. This may prevent line formation behind slower drivers.

In an embodiment, the following measures may be taken automatically or by manually handling the central controller 200:
reducing the maximum speed of at least one vehicle, for example in the case of unsafe behaviour,
stopping one or more vehicles 27,
assigning a driver to a different vehicle 27 if a vehicle 27 fails or needs to be exchanged for any other reason,
rendering warnings and reducing the speed of the vehicles 27.

Warnings for the drivers of the vehicles 27 may be issued by display elements at the vehicle 27 and/or by display elements at the racetrack 3. Alternatively or additionally, warnings may be rendered via loudspeakers at the vehicle 27 and/or at the racetrack 3. For example, light signals may be disposed along the racetrack 3 and/or at the vehicles 27. A warning may be issued by switching light sources on, changing their colours and/or causing the light sources to flash. Warnings may also be depicted visually on display surfaces or as text, for example on display surfaces at the racetrack 3 or remote from the racetrack 3, for example allow team members of the driver of a vehicle 27 located in a team room outside of the racetrack 3 to have an interaction with the vehicle 27 and its driver, for example for providing a team boost to the vehicle 27.

In an embodiment, the vehicle 27 performance or maximum speed may be affected depending on the absolute positions of the vehicles 27 on the racetrack 3, for example to create zones with speed limits for the racetrack 3.

In an embodiment, the vehicle 27 performance or maximum speed may be increased or reduced, for example gradually, depending on the lap time or on a number of laps.

In an embodiment, it may be gathered from the data of the position detection system 17 when a vehicle 27 comes to a standstill or travels very slowly or in the wrong direction. In such a case, in an embodiment, the performance or speed of the vehicle 27 concerned and/or of following vehicles 27 approaching this may be affected.

In an embodiment, the current positions of all vehicles 27 on the racetrack 3 may be sensed and rendered on at least one display apparatus. In an embodiment, lap times and/or racing positions and/or maximum speeds may be also sensed and rendered on at least one display apparatus. In an embodiment, individual one or more such pieces of information may be used to generate or alter virtual elements 30 depending thereon.

In an embodiment, additional display devices may be disposed along the racetrack 3 in order to make information, for example the above-mentioned information, available to the drivers. In an embodiment, a display device may be disposed next to or above the start/finish line 22 of the racetrack 3. In an embodiment, a display device may be disposed at the entrance 24 of the tunnel 23 in order to be able to depict information on a game mode that controls a kind of virtual elements 30 depicted in the tunnel 23 and that controls events resulting from interactions between the vehicle 27 and the virtual elements 30.

In an embodiment, the vehicles 27 may communicate with the central controller 200 to activate or deactivate control elements and/or motor power of the vehicles 27.

In an embodiment, the vehicles 27 may communicate with a central controller 200 to provide a controllable, time-limited performance boost.

In an embodiment, input means such as for example pushbuttons, may be made available to the drivers to retrieve time-limited performance boosts of the vehicle 27. In an embodiment, the input means also have an output means such as for example a status LED, which displays an availability status for the performance boosts. In an embodiment, when all performance boosts have been used, further retrieval of the performance boost may only be available after a definable time span, which may be depicted for the driver by suitable display elements. In an embodiment, the number of available performance boosts may increase per lap or per race, this number being definable by the central controller 200 and be stored in a memory of the vehicle 27.

In an embodiment, the WIFI connection between the vehicles 27 and the central controller 200 may be deactivated at a given vehicle 27, so that the given vehicle 27 no longer receives any control commands, for example, by deactivating the WIFI receiver at the vehicle 27. Thereby, for example, a vehicle 27 which is operated by racetrack 3 staff may be excluded from global control commands of the central controller 200.

In an embodiment, at least one of multiple vehicles 27 may transmit in time intervals a status report including vehicle settings, including for example performance settings, to the central controller 200. In an embodiment, the vehicle settings may be compared to the vehicle settings pre-set for the vehicle 27 by the central controller 200, and in case of deviation, new vehicle settings may be transmitted to the vehicle 27. This may ensure that false or outdated vehicle settings of the vehicle 27 may be corrected in the case of communication errors.

In case no status reports are received from one or more vehicles 27 over a period of multiple transfer cycles, an error or warning signal may be issued to report that the concerned vehicles 27 are not receiving any data to the central controller 200. Alternatively or in addition, it may be established that a vehicle 27 is unable to receive data of the central controller 200 when it does transmit status reports but fails to react to instructions transmitted by the central controller 200.

In an embodiment, the central controller 200 may also cyclically transmit data and/or vehicle settings to the vehicles 27.

If a vehicle 27 does not receive any data or vehicle settings over multiple cycles, the vehicle 27 may be operated with the last received vehicle settings, or the vehicle settings may be set to basic or contingency vehicle settings stored in the vehicle 27.

The basic vehicle settings may be loaded or set automatically at each start-up of the vehicle 27.

In general, human-driven vehicles 27, including motor vehicles 27 such as, for example, automobiles, motorbikes, bumper cars, minibikes, e-scooters, snowmobiles, or e-bikes, may be suitable for use with the present interactive system. Further, muscle-powered vehicles 27, for example bicycles, may be used with the present interactive system. In an embodiment, the driver may be located on or in the vehicle 27. Remote control of the vehicle 27 by a driver is also possible.

The racetrack 3 may form a closed circuit, so that one and the same vehicle 27 may repeatedly pass the at least one virtual element 30 and the second position detection system 17.

The racetrack 3 may be partially or completely disposed outdoors.

In an embodiment, the racetrack 3 may be completely disposed in a hall.

In an embodiment, the interactive system comprises a tunnel 23, which may further comprise transition pieces 9 positioned between tunnel segments 1 as well as an entry awning 10 and/or an exit awning 10, the tunnel 23 overhanging above a road surface. Multiple projectors 6 may be mounted in the tunnel segments 1, wherein the projectors 6 may be mounted spaced apart in succession in the direction of travel of vehicles 27 in the tunnel 23. The projectors 6 may be mounted in a higher position in relation to the ceiling 12 formed by the transition pieces 9 and/or by the awnings 10. Projection surfaces 8 of the projectors 6 may be seamlessly contiguous or overlap on the road surface, including in a portion of the road surface beneath the awnings 10, in the direction of travel thereof.

In an embodiment, the width of the projection surface 8 of the respective projector 6 on the road surface may extend over at least 80%, or over at least 90%, of the width of the road surface.

In an embodiment, the width of the projection surface 8 of the respective projector 6 on the road surface may be at least equal to the width of the road surface.

In an embodiment, the length of the respective projection surface 8 in the direction of travel of the road surface may be greater than the width of the respective projection surface 8.

In an embodiment, a roof 2 may be disposed in each tunnel segments 1 that form adjoining openings in the ceiling 12 formed by the transition pieces and/or by the awnings, wherein the projector 6 may be mounted in the upper area of the roof 2.

In an embodiment, the roofs 2 may be present as segments, which may be connected by interposing transition pieces, wherein the ceiling 12 may be formed by the transition pieces 9 and by the awnings 10, inner surfaces of the roofs 2 forming the openings in the ceiling 12.

In an embodiment, the projectors 6 may be present above the openings 5 at a vertical distance of at least 0.5 meter, in particular a distance of at least one meter from the openings 5.

The interactive system may further comprise a tunnel 23, wherein the tunnel 23 may be composed of at least two tunnel segments 1, a projector 6 being mounted in each of the segments, wherein the projector 6 projects an image onto a road surface within the tunnel 23, wherein the projection surfaces 8 of successive projectors 6 may at least partially overlap and wherein at least three receivers of the first position detection system 17, which receive a signal of a transmitter disposed at a vehicle 27 and derive therefrom the position of the vehicle 27 in the tunnel 23, may be disposed in the tunnel 23 and a second position detection system 17 may be disposed in at least one tunnel segment 1, which system comprises at least one transmitter and one receiver and derives the distance of the vehicle 27 to the transmitter and/or the receiver by time-of-flight measurement of an optical signal reflected by the vehicle 27 and received at the receiver, wherein the position data obtained by the first and second position detection systems 17 may be transmitted to a central controller 200, which may alter the position and/or appearance of at least one virtual element 30 depicted in the projection surfaces 8 based on the position data of at least one vehicle 27.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. An interactive system for a track for human-driven vehicles, wherein:
at least one virtual element is depicted in at least one area on a road surface of the track or as a hologram hovering above the at least one area on the road surface of the track;
the track is disposed inside an illuminated hall or runs at least partially outdoors; and
the at least one area on the road surface of the track is within a partial area of the track, the partial area of the track being constructed as a tunnel, surrounding light in the partial area being less intense than in the illuminated hall or outdoors;
wherein the tunnel further comprises a first awning positioned at a start of the tunnel and a second awning positioned at an end of the tunnel.

2. The interactive system of claim 1, wherein the first and second awnings are configured to attenuate incident light in a first segment of the tunnel following the start of the tunnel and in a second segment of the tunnel preceding the end of the tunnel.

3. The interactive system of claim 1, further comprising a plurality of projectors mounted above respective openings formed in a ceiling of the tunnel.

4. The interactive system of claim 1, wherein:
the tunnel is composed of multiple tunnel segments;
the tunnel segments each comprise a roof having side faces perpendicular to the road surface of the track;
openings are formed in the side faces;
the side faces of contiguous tunnel segments facing each other are connected by a transition piece;
the transition piece forms part of a ceiling of the tunnel;
the roofs of the tunnel segments protrude above a level of the ceiling of the tunnel; and
the interactive system further comprises a plurality of projectors mounted in the roofs of the tunnel segments.

5. The interactive system of claim 1, further comprising:
a plurality of projectors, a projection surface of each projector covering a respective partial area of the road surface of the track; and
the projection surfaces are contiguous or overlapping in a direction of travel of the vehicles on the road surface of the track.

6. The interactive system of claim 1, further comprising:
a plurality of uniform tunnel segments of the tunnel, each uniform tunnel segment comprising a plurality of uniform roofs, each uniform tunnel segment having a rectangular layout;
a plurality of projectors, at least one projector being mounted on each uniform tunnel segment;
at least one transition piece, one transition piece being provided between the uniform roofs of adjoining tunnel segments, the at least one transition piece being adapted for compensating for different slopes or angles between the adjoining tunnel segments.

7. The interactive system of any one of claims 1 to 6, wherein the track is a racetrack.
